# EUROPEAN PATENT APPLICATION

(11) **EP 4 604 409 A2**
(43) Date of publication of application: **20.08.2025**
(21) Application number: 25157297.0
(22) Date of filing: 12.02.2025
(51) Int. Cl.: H04B 7/04, H04B 7/06, H04L 5/14, H04W 8/00

(54) **UE CAPABLE OF SIMULTANEOUS TRANSMISSION AND RECEPTION APPLIED IN AMBIENT IOT**

(30) Priority: 15.02.2024 GB 202402081
(71) Applicant: Nokia Technologies Oy, 02610 Espoo (FI)
(72) Inventor: HARREBEK, Johannes, Aalborg (DK); VEJLGAARD, Benny, Gistrup (DK); BARBU, Oana-Elena, Aalborg (DK); SVENDSEN, Simon, Aalborg (DK); KIILERICH PRATAS, Nuno Manuel, Aalborg (DK)
(74) Representative: Nokia EPO representatives

(57) **Abstract**

Embodiments of the present disclosure relates to a solution on UE capable of simultaneous transmission and reception applied in ambient IoT. **In** particular, the method includes: receiving, at a first apparatus and from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; determining a first set of resources for transmission to the third apparatus based on the parameter; determining a second set of resources for reception from the third apparatus based on the first set of resources and capability information of the first apparatus; and performing the discovery or communication session with the third apparatus based on the determined configuration.

## Description

### FIELDS

Various example embodiments of the present disclosure generally relate to the field of telecommunication and in particular, to methods, devices, apparatuses and computer readable storage medium for user equipment (UE) capable of simultaneous transmission and reception applied in ambient internet of thing (IoT).

### BACKGROUND

Internet of Things, or IoT, is a network of physical devices. The number of IoT connections has been growing rapidly in recent years and is predicted to be hundreds of billions. With more and more 'things' expected to be interconnected for improving production efficiency and increasing comforts of life, it demands further reduction of size, cost, and power consumption for IoT devices. A critical issue with existing technologies for the target use cases is the capability of cooperating with energy harvesting considering limited device size. Cellular devices usually consume tens or even hundreds of milliwatts power for transceiver processing. Taking narrow band IoT (NB-IoT) module for example, the typical current consumption for receive processing is about 60mA with supply voltage higher than 3.1V, while 70mA for transmitting processing at 0dBm transmit power. Furthermore, the output power provided by typical radio frequency (RF) energy harvester is mostly below 1 milliwatt, considering the small size of a few square centimeters for practical devices. Since the available RF power is far less than the consumed power, it is impractical to power cellular devices directly by energy harvesting in most case.

Further, third generation partner project (3GPP) fifth generation (5G) new radio (NR) currently supports two duplexing modes: frequency division duplex (FDD) for paired bands and time division duplex (TDD) for unpaired bands. In TDD, the time domain resource is split between downlink and uplink. Allocation of a limited time duration for the uplink in TDD would result in reduced coverage, increased latency, and reduced capacity. Moreover, in the field of wireless communications, subband non-overlapping full duplex (SBFD) allows for simultaneous transmission and reception in different frequency subbands, optimizing network capacity.

### SUMMARY

In a first aspect of the present disclosure, there is provided a first apparatus. The first apparatus comprises at least one processor; and at least one memory storing instructions that, when executed by the at least one processor, cause the first apparatus to: transmit, to a second apparatus, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; receive, from the second apparatus, configuration information associated with a discovery or communication session with a third apparatus, wherein the configuration information indicates at least one of: a time window for the discovery or communication session, a frequency band for the discovery or communication session, or a parameter for generating the resource configuration; determine a resource configuration for the discovery or communication session based on the configuration information; and perform the discovery or communication session with the third apparatus based on the determined configuration.

In a second aspect of the present disclosure, there is provided a second apparatus. The second apparatus comprises at least one processor; and at least one memory storing instructions that, when executed by the at least one processor, cause the second apparatus to: receive, from a set of first apparatuses, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; and transmit, to the set of first apparatuses, configuration information associated with a discovery or communication session with a third apparatus, wherein the configuration information indicates at least one of: a time window for the discovery or communication session, a frequency band for the discovery or communication session, or a parameter for generating the resource configuration.

In a third aspect of the present disclosure, there is provided a first apparatus. The first apparatus comprises at least one processor; and at least one memory storing instructions that, when executed by the at least one processor, cause the first apparatus to: receive, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; determine a first set of resources for transmission to the third apparatus based on the parameter; determine a second set of resources for reception from the third apparatus based on the first set of resources and capability information of the first apparatus; and perform the discovery or communication session with the third apparatus based on the determined configuration.

In a fourth aspect of the present disclosure, there is provided a method. The method comprises: transmitting, at a first apparatus and to a second apparatus, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; receiving, from the second apparatus, configuration information associated with a discovery or communication session with a third apparatus, wherein the configuration information indicates at least one of: a time window for the discovery or communication session, a frequency band for the discovery or communication session, or a parameter for generating the resource configuration; determining a resource configuration for the discovery or communication session based on the configuration information; and performing the discovery or communication session with the third apparatus based on the determined configuration.

In a fifth aspect of the present disclosure, there is provided a method. The method comprises: receiving, at a second apparatus and from a set of first apparatuses, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; and transmitting, to the set of first apparatuses, configuration information associated with a discovery or communication session with a third apparatus, wherein the configuration information indicates at least one of: a time window for the discovery or communication session, a frequency band for the discovery or communication session, or a parameter for generating the resource configuration.

In a sixth aspect of the present disclosure, there is provided a method. The method comprises: receiving, at a first apparatus and from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; determining a first set of resources for transmission to the third apparatus based on the parameter; determining a second set of resources for reception from the third apparatus based on the first set of resources and capability information of the first apparatus; and performing the discovery or communication session with the third apparatus based on the determined configuration.

In a seventh aspect of the present disclosure, there is provided a first apparatus. The first apparatus comprises means for transmitting, to a second apparatus, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; means for receiving, from the second apparatus, configuration information associated with a discovery or communication session with a third apparatus, wherein the configuration information indicates at least one of: a time window for the discovery or communication session, a frequency band for the discovery or communication session, or a parameter for generating the resource configuration; means for determining a resource configuration for the discovery or communication session based on the configuration information; and means for performing the session with the third apparatus based on the determined configuration.

In an eighth aspect of the present disclosure, there is provided a second apparatus. The second apparatus comprises means for receiving, from a set of first apparatuses, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; and means for transmitting, to the set of first apparatuses, configuration information associated with a discovery or communication session with a third apparatus, wherein the configuration information indicates at least one of: a time window for the discovery or communication session, a frequency band for the discovery or communication session, or a parameter for generating the resource configuration.

In a ninth aspect of the present disclosure, there is provided a first apparatus. The first apparatus comprises means for receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; means for determining a first set of resources for transmission to the third apparatus based on the parameter; means for determining a second set of resources for reception from the third apparatus based on the first set of resources and capability information of the first apparatus; and means for performing the session with the third apparatus based on the determined configuration.

In a tenth aspect of the present disclosure, there is provided a computer readable medium. The computer readable medium comprises instructions stored thereon for causing an apparatus to perform at least the method according to the fourth aspect.

In an eleventh aspect of the present disclosure, there is provided a computer readable medium. The computer readable medium comprises instructions stored thereon for causing an apparatus to perform at least the method according to the fifth aspect.

In a twelfth aspect of the present disclosure, there is provided a computer readable medium. The computer readable medium comprises instructions stored thereon for causing an apparatus to perform at least the method according to the sixth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1 illustrates an example communication environment in which example embodiments of the present disclosure can be implemented;
FIG. 2A and FIG. 2B illustrates schematic diagrams of ambient IoT topologies according to example embodiments of the present disclosure;
FIG. 3A to FIG. 3C illustrate schematic diagrams of examples of duplexing modes;
FIG. 4 illustrates a signaling flow of ambient IoT communication in accordance with some example embodiments of the present disclosure;
FIG. 5 illustrates a schematic diagram of frequency resources in accordance with some example embodiments of the present disclosure;
FIG. 6A and FIG. 6B illustrate signaling flows of ambient IoT communication in accordance with some example embodiments of the present disclosure, respectively;
FIG. 7 illustrates a flowchart of a method implemented at a first device according to some example embodiments of the present disclosure;
FIG. 8 illustrates a flowchart of a method implemented at a second device according to some example embodiments of the present disclosure;
FIG. 9 illustrates a flowchart of a method implemented at a first device according to some example embodiments of the present disclosure;
FIG. 10 illustrates a simplified block diagram of a device that is suitable for implementing example embodiments of the present disclosure; and
FIG. 11 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As used herein, the term "subband full duplex (SBFD)" may refer to a duplex communication mode that enables simultaneous transmission and reception within separate, non-overlapping frequency subbands, thereby enhancing spectral efficiency and network throughput. This concept is broadly applicable and not confined to any specific communication standards, making it relevant across a wide range of technologies from Long Term Evolution and New Radio systems to future advancements such as sixth generation communications. It is noted that the term "subband full duplex" as used in this disclosure is not intended to be limited to the instances mentioned herein.

The term "ambient IoT" used herein may refer to a new class of IoT devices primarily powered by harvesting ambient energy from radio waves, light, motion, heat, or any other viable ambient energy source. The Ambient IoT is an extension of the existing IoT. Ambient IoT devices carry out many of the same functions as IoT devices and target many of the same use cases but require additional design choices to meet solution demands. By relying on energy harvested from ambient sources, the Ambient IoT makes it possible to develop lower-cost, smaller, and maintenance-free devices, allowing the IoT to become more scalable in existing use cases and in use cases still to be developed. The term "ambient IoT device" used herein may refer to a 3GPP IoT device which is much smaller and cheaper compared to previous generations of IoT. The ultimate ambient IoT energy source is that from radio waves. Both ambient IoT and ambient computing rely upon energy harvesting as one of the key mechanisms for powering and enabling the technology. Energy harvesting, as it applies to ambient IoT and ambient computing, is the harnessing of the power in ambient radio waves to power tiny computers.

The term "capability information" used herein may refer to a message that UE sends to network to inform details of its capability. The term "discovery session" used herein may refer to a session that is used to discover a device. The term "communication session" used herein may refer to a session that two devices can communicate with each other.

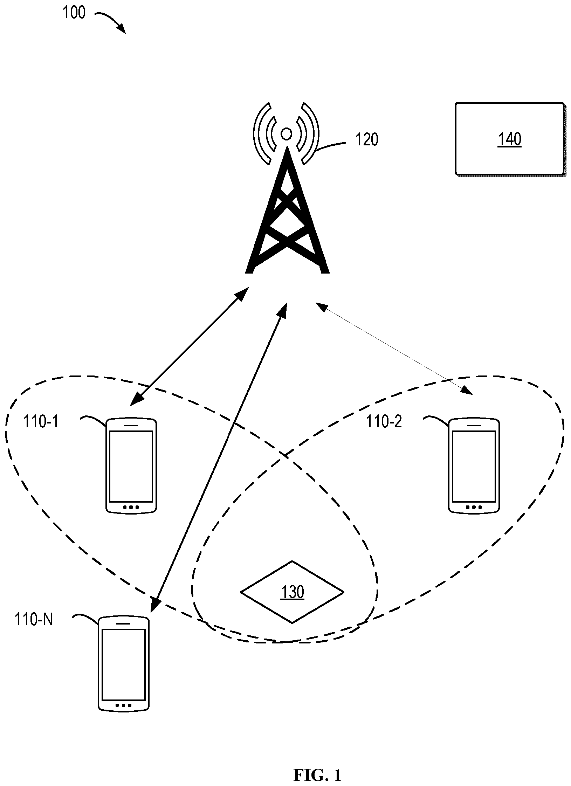

FIG. 1 illustrates an example communication environment 100 in which example embodiments of the present disclosure can be implemented. In the communication environment 100, there may be a plurality of first devices including the first device 110-1, the first device 110-2, ..., the first device 110-N (also collectively referred to as "first device 110", N is an integer number). The communication environment 100 may also include a second device 120, a third device 130 and a fourth device 140.

In the following, for the purpose of illustration, some example embodiments are described with the first device 110 operating as a terminal device and the second device 120 operating as a network device. However, in some example embodiments, operations described in connection with a terminal device may be implemented at a network device or other device, and operations described in connection with a network device may be implemented at a terminal device or other device. The third device 130 may acts as an ambient IoT device, for example, a tag. The fourth device 140 may be a session control unit (SCU) which may be implemented at a core network device, for example, a location management unit (LMU).

In some example embodiments, the third device 130 may be a passive radio that is a device that harnesses energy from wireless signals sent on carriers and/or bandwidths and charges a simple circuitry that, once activated, it will emit/reflect a signal which encodes at least the identity (ID) of the passive radio. The typical system architecture around a passive radio may include: an activator which is a device that sends an activation signal targeted at waking up the passive radio, the passive radio which harnesses energy over a range of frequencies and listens for activation signals, and a reader which is a device that listens and detects the passive radio signals. The reader may or may not be collocated with the activator. If the activation signal is detected, the third device may emit/reflect a signal which is specific to that radio ID.

In some example embodiments, if the first device 110 is a terminal device and the second device 120 is a network device, a link from the second device 120 to the first device 110 is referred to as a downlink (DL), and a link from the first device 110 to the second device 120 is referred to as an uplink (UL). In DL, the second device 120 is a transmitting (TX) device (or a transmitter) and the first device 110 is a receiving (RX) device (or a receiver). In UL, the first device 110 is a TX device (or a transmitter) and the second device 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

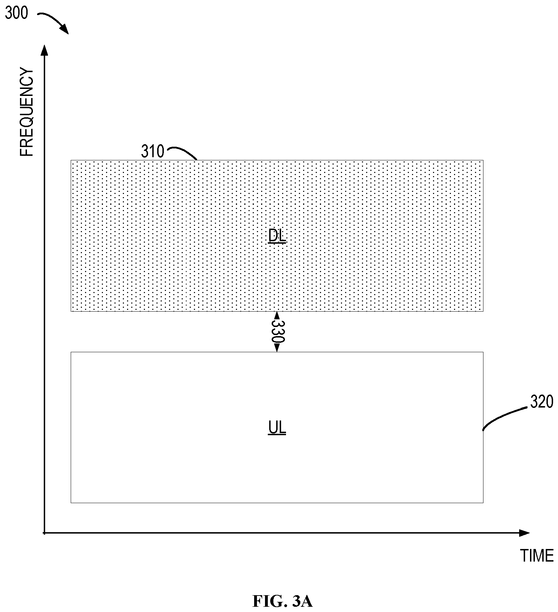

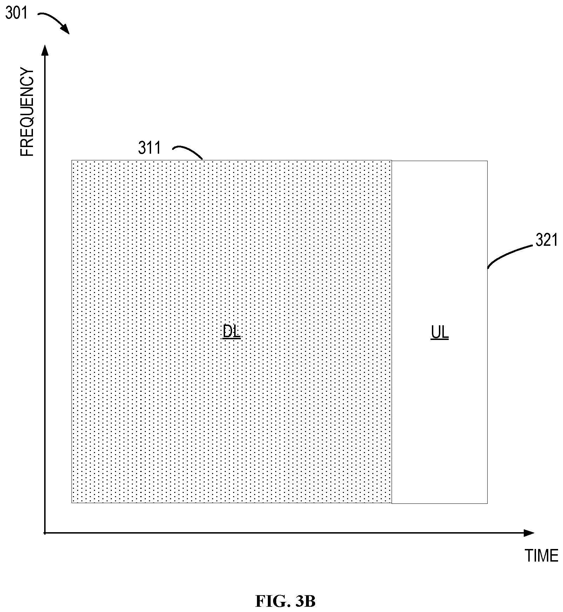

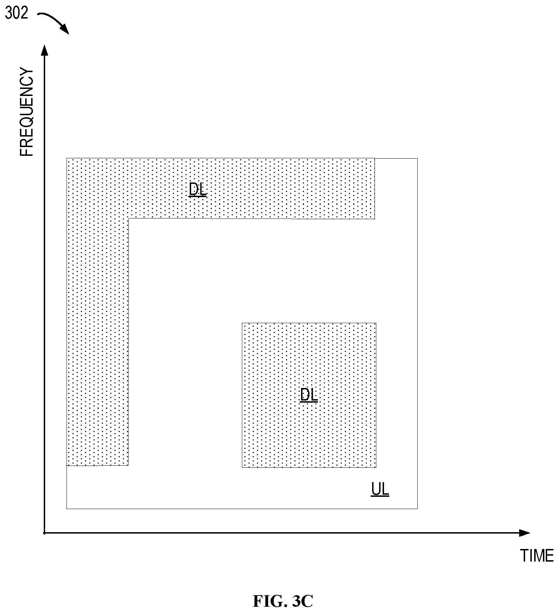

A full duplexing mode may be employed in the communication environment 100. FIG. 3A to FIG. 3C illustrate examples 300, 301, and 302 of duplexing modes. Currently, the 3rd Generation Partnership Project (3GPP) 5th Generation (5G) New Radio (NR) supports two duplexing modes: Frequency Division Duplexing (FDD) for paired bands (shown as example 300) and Time Division Duplexing (TDD) for unpaired bands (shown as example 301). As shown in FIG. 3A, in FDD operation, the frequency domain resource is divided into a DL band 310, an UL band 320 and a guard band 330. UL and DL transmissions are allowed at the same time over different frequency bands which are separated by a guard band. Frequency bands are generally inflexible to change which may result in higher complexity and high cost. As shown in FIG. 3B, in TDD operation, the time domain resource is divided into DL 311 symbols/slots and UL symbols/slots 321. However, allocating a limited time duration for the UL in TDD can result in reduced coverage, increased latency, and reduced capacity. To address these challenges, a mechanism on the evolution of duplexing operation in NR has been proposed. One of the objectives of the mechanism is to enable simultaneous DL and UL transmissions on different physical resource blocks (RBs) within an unpaired wideband NR cell (shown as example 302). This new way of duplexing is referred to as SBFD. As shown in FIG. 3C, in SBFD operation, the time and frequency domain resource are split into a DL subband and a UL subband.

To support full duplexing operation, the self-interference between transmission (TX) and reception (RX) needs to be minimized in order to maintain reception performance while transmitting. The overall obtainable self-interference rejection gain is achieved by TX/RX antenna isolation followed by an analog rejection stage and finally a digital cancellation stage. The antenna TX/RX isolation is required to avoid compression of the receiver analog frontend LNA and with reference to prototype experiments a TX/RX antenna isolation in the range 45-50dB(1) is required for full duplex operation with reasonable RX sensitivity.

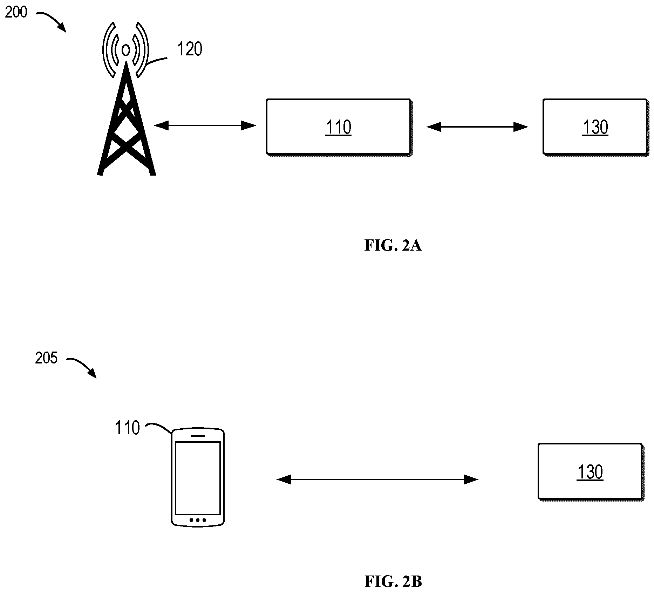

Different topologies for ambient IoT networks and devices may be employed in the communication environment 100. In all these topologies, the ambient IoT device may be provided with a carrier wave from other node(s) either inside or outside the topology. The links in each topology may be bidirectional or unidirectional. BS, UE, assisting node, or intermediate node could be multiple BSs or UEs, respectively. The mixture of indoor and outdoor placement of such nodes is regarded as a network implementation choice. FIG. 2A illustrates a schematic diagram of a topology 200 (also referred to as Topology 2) that can be applied in the communication environment 100. In particular, the ambient IoT device (i.e., the third device 130) may communicate bidirectionally with an intermediate node (for example, the first device 110) between the ambient IoT device and base station (for example, the second device 120). In this topology, the intermediate node can be a relay, IAB node, UE, repeater, etc. which is capable of ambient IoT. The intermediate node may transfer the information between BS and the ambient IoT device. FIG. 2B illustrates a schematic diagram of a topology 205 (also referred to as Topology 4) that can be applied in the communication environment 100. In particular, the Ambient IoT device (i.e., the third device 130) may communicates bidirectionally with a UE (for example, the first device 110). The communication between UE and the ambient IoT device may include ambient IoT data and/or signaling. According to the topologies shown in FIG. 2A and FIG. 2B, the UE (for example, the first device 110) is required to support full duplex if it operates in a mono-static mode and transmit the activation signal at the same time its listening for the A-IoT tag backscattered response.

Multiple Ambient IoT devices (Tags) may be located within a 3GPP TDD cell. For Tag discovery and subsequent Tag communication at least one Activator and one Reader are required for illuminating the Tag and for receiving the Tag response signal. The Activator entity must be in proximity of the Tag to secure adequate link budget for tag activation. The Reader entity may be located further away from the Tag compared to the Activator entity. While each tag could be addressed one at a time, such sequential approach is very time consuming. Parallel multi-tag communications can significantly reduce latency, but it comes with some limitations: Tags may be simple backscatter type devices which do not support frequency or time shift of the response signal compared to the activation signal; UEs are half -duplex and may either be configured as Activator or Reader but cannot support parallel transmit & receive.; the Reader may pick up Activation signals for other tags if transmitted at same frequency. In an example scenario, the entity closest to each Tag is configured as Activator for that Tag while another entity is configured as Reader for that Tag. To minimize interference each Tag communication session is configured for using activation signals at different frequencies.

In summary, due to the half-duplex nature of the activator/reader entities involved a configuration of up to 2*X entities are required to successfully communicate in parallel with X Tags. This is a worst-case scenario, as some UE might be able to interact (activate or read) with multiple Tags.

According to some example embodiments of the present disclosure, there is provided a solution for UE capable of simultaneous transmission and reception applied in ambient IoT. In particular, the solution is proposed, making use of UEs capable of simultaneous transmission and reception, to reduce the number of entities required for repeated parallel communication with multiple identified tags within a given area. As such a UE with FDcon capability may be configured as Activator for one Tag while being assigned as Reader for another Tag. In this way, it can enable an efficient illumination and discovery procedure.

Example embodiments of the present disclosure will be described in detail below with reference to the accompanying drawings.

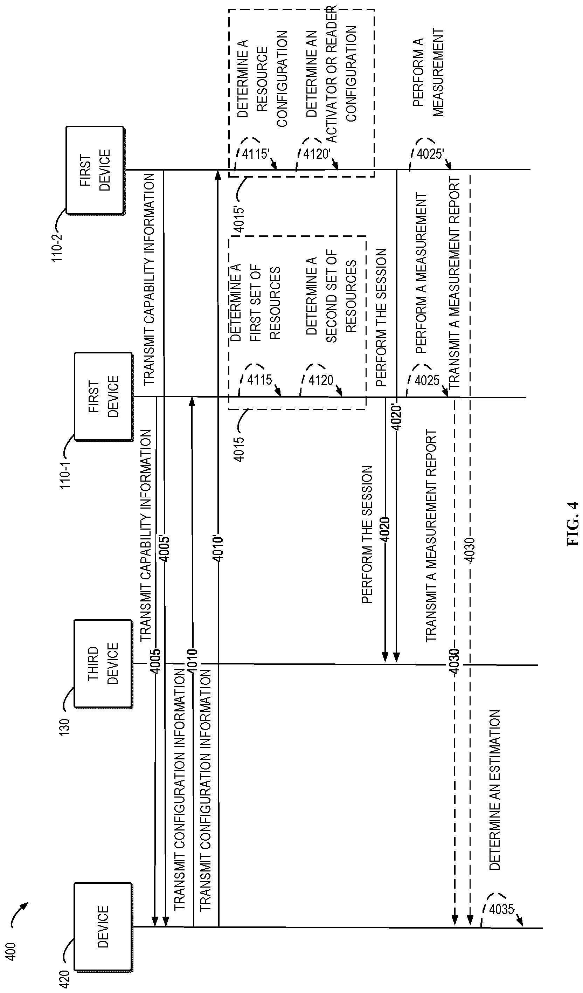

Reference is made to FIG. 4, which illustrates a signaling flow 400 of ambient IoT communication in accordance with some embodiments of the present disclosure. For the purposes of discussion, the signaling flow 400 will be discussed with reference to FIG. 1. The signaling flow 400 involves the first device 110-1, the first device 110-2, the third device 130 and the device 420. In some example embodiments, the second device 120 may act as the device 420. Alternatively, the fourth device 140 may act as the device 420. It is noted that the devices and the number of devices shown in FIG. 4 are only examples not limitations.

The first device 110-1 transmits (4005) its capability information to the device 420. In other words, the device 420 receives the capability information from the first device 110-1. The capability information indicates whether the fist device 110-1 supports the full duplex operation. If the first device 110-1 supports the full duplex operation, the capability information further includes: an indication of full duplex capability. Alternatively, or in addition, the capability information may indicate a bandwidth gap (for example, a guard band) between uplink and downlink bandwidths for the full duplex operation. For example, the capability information may indicate UL/DL bandwidth isolation and configuration. In some other example embodiments, the capability information may indicate a spatial gap (for example, different directions) between uplink and downlink for the full duplex operation. For example, the capability information may indicate UL/DL spatial isolation and configuration. In addition, the capability information may also include one or more of: the number of reception and transmission (RX and TX) antenna constellations, or a reception and transmission (RX/TX) antenna constellation for the full duplex operation.

In some example embodiments, the first device 110-2 may also transmit (4005') its capability information to the device 420. In other words, the device 420 receives the capability information from the first device 110-2. In some example embodiments, if the first device 110-2 does not support the full duplex operation, the capability information may indicate that the first device 110-2 does not support the full duplex operation. It is noted that the order of the transmissions 4005 and 4005' is only an example not limitation. The transmissions 4005 and 4005' may take place in any proper order.

The device 420 transmits (4010) configuration information to the first device 110-1. In other words, the first device 110-1 receives the configuration information from the device 420. In some example embodiments, the device 420 may also transmit (4010') the configuration information to the first device 110-2. In other words, the first device 110-2 receives (4010') the configuration information from the device 420. It is noted that transmissions 4010 and 4010' may take place in any proper order.

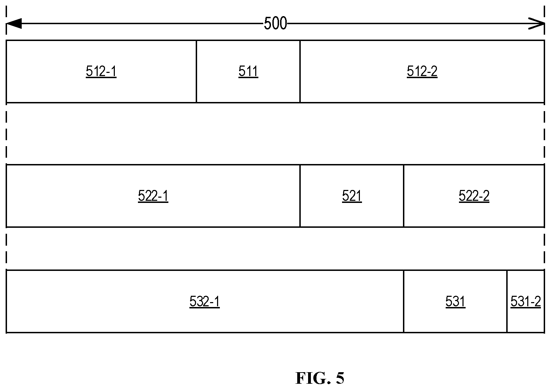

The configuration information indicates one or more of: a time window for the discovery or communication session, a frequency band (for example, the frequency band 500 in FIG. 5) for the discovery or communication session, or a parameter for generating the resource configuration. For example, the configuration information may indicate a set of time-domain resources for the discovery or communication session. Alternatively, or in addition, the configuration information may indicate a set of frequency-domain resources (such as, a set of PRBs) for the discovery or communication session. The parameter for generating the resource configuration may be a random seed for the configuration. In some other example embodiments, the configuration information may indicate spatial information for the discovery or communication session. For example, the configuration information may indicate including certain directions and/or excluding certain directions.

The first device 110-1 determines (4015) a resource configuration for the discovery or communication session based on the configuration information. In some example embodiments, if the first device 110-1 supports the full duplex operation, the first device 110-1 may determine (4015) a first set of resources for transmission to the third device 130 based on the parameter, the time window, and the frequency band. For example, the first device 110-1 may initialize a pseudorandom number generator based on the parameter. In this case, the first device 110-1 may determine a number of random integers using the pseudorandom number generator. The first device 110-1 may determine a set of transmission carriers by mapping each of the random integers to a transmission carrier. For example, each of the random integers may map to an index in a table of available TX carriers. By way of example, as shown in FIG. 5, the first device 110-1 may select one of TX carriers 511, 521 and 531. The first device 110-1 may determine the first set of resources including the set of transmission carriers (for example, the TX carrier 511). In some example embodiments, a transmission duration for each transmission carrier in the set of transmission carrier is based on a type of the third device 130. For example, the transmission duration may be determined based on whether the device 130 backscatters the signal or not.

In some example embodiments, if the first device 110-1 supports the full duplex operation, the first device 110-1 may determine (4020) a second set of resources for reception from the third device 130 based on the first set of resources and capability information of the first device 110-1. For example, the first device 110-1 may determine, for each transmission carrier in the set of transmission carrier, one or more reception carriers adjacent to the transmission carrier. By way of example, as shown in FIG. 5, if the first device 110-1 selects the TX carrier 511, the first device 110-1 may determine the RX carriers 512-1 and 512-2 adjacent to the TX 511. As another example, if the first device 110-1 selects the TX carrier 521, the first device 110-1 may determine the RX carriers 522-1 and 522-2 adjacent to the TX 521. As a further example, if the first device 110-1 selects the TX carrier 531, the first device 110-1 may determine the RX carriers 532-1 and 532-2 adjacent to the TX 531. The first device 110-1 may determine the second set of resources comprising a set of reception carriers including the one or more reception carriers for each transmission carrier. For example, the first device 110-1 selects the RX carriers adjacent to each of the selected TX carriers e.g. for f_tx1, the first device 110-1 selects adjacent carriers f_rx1,1, f_rx1,2. In general, for TX carrier n f_txn, the first device 110-1 may select the f_rxn1, f_rxn2,..., and configure the latter carriers for reception. The set of receive carriers {f_rx 1,1; f_rx1,2;...; f_rxn,1, f_rxn,2,... } may be selected for RX measurements. In some example embodiments, the reception duration per each selected reception carrier may be configured in relation to the transmission duration and a round-trip duration between the first device 110-1 and the third device 130. For example, if the third device 130is expected to be maximum 50 m way, then the RX may listen for at least the round-trip duration that the signal would take to travel the 100 m (e.g. 330 ns).

The first device 110-2 also determines (4015') a resource configuration for the discovery or communication session based on the configuration information. In some example embodiments, if the first device 110-2 does not support the full duplex operation, the first device 110-2 may determine (4115') a time and frequency resource configuration based on the parameter, the time window, and the frequency band. In this case, the time and frequency resource configuration may be used for either uplink or downlink. The first device 110-2 may determine (4120') an activator configuration or a reader configuration based on the parameter. In other words, if the first device 110-2 does not support the full duplex operation, the first device 110-2 may be configured with activator configuration or reader configuration based on the random seed. In some example embodiments, the first device 110-2 may be configured as a reader first. It is noted that the determinations 4015 and 4015' may take place in any proper order.

The first device 110-1 performs (4020) the discovery or communication session with the third device 130. For example, the first device 110-1 may act as an activator or reader for the third device 130. The first device 110-1 may perform the discovery or communication session in a number of available slots in the time window. The first device 110-1 may perform (4020') the discovery or communication session with the third device 130. For example, the first device 110-2 may act as either an activator or a reader for the third device 130. It is noted that the steps 4020 and 4020' may take place in any proper order.

The first device 110-1 may perform (4025) a measurement in the discovery or communication session. For example, the first device 110-1 may receive the response including an identity of the third device 130 from the third device 130 and measure a payload of the third device 130. The first device 110-1 may transmit (4030) a session measurement report to the device 420. In other words, the device 420 may receive the session measurement report from the first device 110-1. In some example embodiments, the measurement report may include the measurement for each slot in the discovery and communication session.

The first device 110-2 may also perform (4025') a measurement in the discovery or communication session. For example, the first device 110-1 may receive the response including an identity of the third device 130 from the third device 130 and measure a payload of the third device 130. The first device 110-2 may transmit (4030') a session measurement report to the device 420. In other words, the device 420 may receive the session measurement report from the first device 110-2. It is noted that the steps 4025 and 4025' can take place in any proper order and the transmissions 4030 and 4030' can take place in any proper order.

The device 420 may determine (4035) an estimation of the discovery or communication session based on the set of session measurement reports. For example, the device 420 may perform a joint estimation of the communication sessions and report any duplicates.

According to example embodiments described with reference to FIG. 5, it can enable low cost and highly efficient sweep of illumination (TX) and reader (RX) of all devices in the ambient IoT session as the full duplex configuration devices can receive and transmit in parallel.

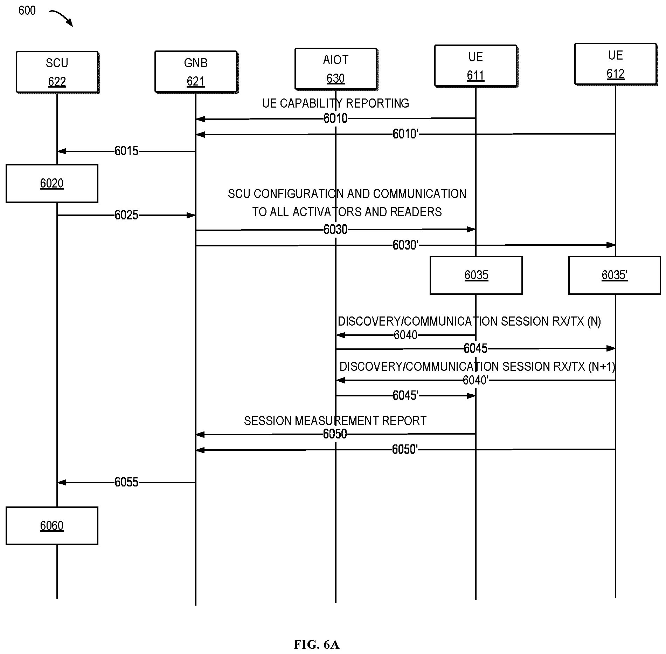

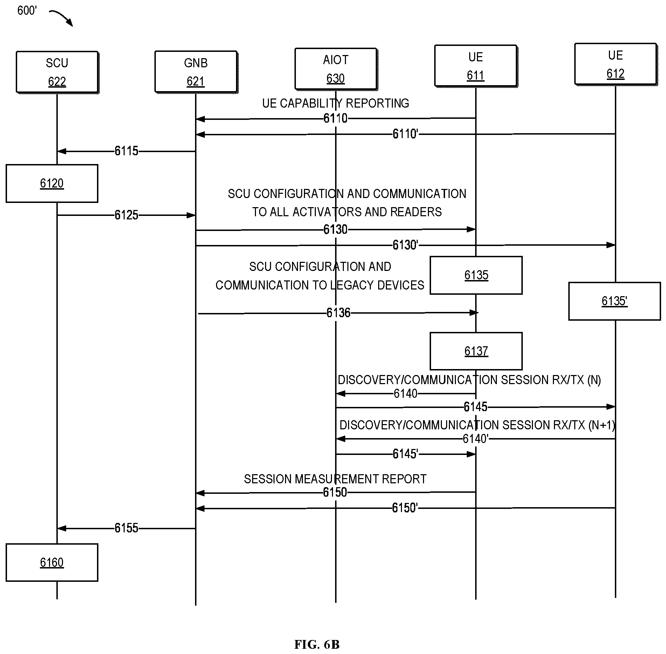

Example embodiments are described in detail with reference to FIG. 6A and FIG. 6B.

Reference is made to FIG. 6A, which illustrates a signaling flow 600 of ambient IoT communication in accordance with some embodiments of the present disclosure. The signaling flow 600 involves the UE 611, the UE 612, the gNB 621 which provides a serving cell to the UE 611 and the UE 612, the SCU 622, and the ambient IoT device 630. One of the first devices 110 shown in FIG. 1 can act as the UE 611 and another first device 110 can act as the UE 612. The second device 120 shown in FIG. 1 can act as the gNB 621 and the fourth device 140 may act as the SCU 622. The third device 130 may act as the ambient device 630.

The UE 611 and the UE 612 may transmit (6010; 6010') UE capability information to the gNB 621. The reported UE capability information may indicate the full duplex configuration support. For example, the UE capability information may include one or more of: the full duplex configuration capability, the number of supported RX and TX antenna constellation, RX/TX antenna constellation dependencies for maintaining adequate full duplex configuration isolation, UL/DL bandwidth isolation and configuration options, or UL/DL spatial isolation and configuration options.

The gNB 621 may transmit (6015) the received UE capability information to the SCU 622. The SCU 622 may determine (6020) a scheduling of ambient IoT session based on a session request and the UE capability information.

The SCU 622 may configure (6025) a discovery and communication session. The configuration may include one or more of: a time window, one or more frequency bands, cells/spatial domains.

The gNB 621 may transmit the configuration information to all activators and readers in the discovery and communication session. For example, the gNB 621 may transmit (6030; 6030') the configuration information to the UE 611 and the UE 612, respectively. The configuration information may include one or more of: a time window, one or more frequency band, spatial information (e.g. including/excluding certain directions), or a random seed for the configuration. Legacy devices can be configured with time/frequency & activator/reader configurations based on random seed.

The UE 611 may determine (6035) a configuration based on the configuration information. For example, if the UE 611 supports the full duplex operation, the TX part may be configured based on the random seed and the RX part may be configured as the remaining frequency bands based on the device isolation capabilities.

The UE 612 may determine (6035') a configuration based on the configuration information. For example, if the UE 612 supports the full duplex operation, the TX part may be configured based on the random seed and the RX part may be configured as the remaining frequency bands based on the device isolation capabilities. The UE 611 and the UE 612 may be configured to repeat the communication sessions in the number of slots available in the time window provided. For each new TX/RX slot in the discovery and communication session, the UE 611 and the UE 612 may be configured based on the above using the next configuration based on the initial random seed. The UE 611 and the UE 612 may run the discovery and communication session in the pre-configured number of slots. For example, according to the n-th configuration, the UE 611 may act as an activator and transmit (6040) an activation signal to the ambient device 630. After receiving activation signal, the ambient device 630 may transmit (6045) a signal to the UE 612 which acts as a reader. According to the (n+1)-th configuration, the UE 612 may act as an activator and transmit (6040') an activation signal to the ambient device 630. After receiving activation signal, the ambient device 630 may transmit (6045') a signal to the UE 611 which acts as a reader.

The UE 611 and the UE 612 may transmit (6050; 6050') their measurements in the measurement reports for each slot in the discovery and communication session to the gNB 621 which then forward (6055) the received measurement reports to the SCU 622. The SCU 622 may perform (6060) a joint estimate of the communication session and report any duplicates.

Reference is made to FIG. 6B, which illustrates a signaling flow 600' of ambient IoT communication in accordance with some embodiments of the present disclosure. The signaling flow 600 involves the UE 611, the UE 612, the gNB 621 which provides a serving cell to the UE 611 and the UE 612, the SCU 622, and the ambient IoT device 630. One of the first devices 110 shown in FIG. 1 can act as the UE 611 and another first device 110 can act as the UE 612. The second device 120 shown in FIG. 1 can act as the gNB 621 and the fourth device 140 may act as the SCU 622. The third device 130 may act as the ambient device 630.

The UE 611 and the UE 612 may transmit (6110; 6110') UE capability information to the gNB 621. The reported UE capability information may indicate the full duplex configuration support. For example, the UE capability information may include one or more of: the full duplex configuration capability, the number of supported RX and TX antenna constellation, RX/TX antenna constellation dependencies for maintaining adequate full duplex configuration isolation, UL/DL bandwidth isolation and configuration options, or UL/DL spatial isolation and configuration options.

The gNB 621 may transmit (6115) the received UE capability information to the SCU 622. The SCU 622 may determine (6120) a scheduling of ambient IoT session based on a session request and the UE capability information.

The SCU 622 may configure (6125) a discovery and communication session. The configuration may include one or more of: a time window, one or more frequency bands, cells/spatial domains.

The gNB 621 may transmit the configuration information to all activators and readers in the discovery and communication session. For example, the gNB 621 may transmit (6130) the configuration information to the UE 611. The gNB may transmit (6130') the configuration information to the UE 612. The configuration information may include one or more of: a time window, one or more frequency band, spatial information (e.g. including/excluding certain directions), or a random seed for the configuration. Legacy devices can be configured with time/frequency & activator/reader configurations based on random seed.

The UE 611 may determine (6135) a configuration based on the configuration information. For example, if the UE 611 does not support the full duplex operation, the UE 611 may determine (6135) a reader configuration. In some embodiments, a configuration may be optionally needed for each configuration. A series of configurations may be configured. By way of example, the gNB 621 may transmit (6136) the configuration information to all legacy activators and readers in the discovery and communication session. The UE 611 may then determine (6137) a configuration based on the configuration information. For example, the UE 611 may determine (6137) an activator configuration. **In** some example embodiments, the UE 611 may be configured first as a reader and then as an activator.

The UE 612 may determine (6135') a configuration based on the configuration information. For example, if the UE 612 supports the full duplex operation, the TX part may be configured based on the random seed and the RX part may be configured as the remaining frequency bands based on the device isolation capabilities. The UE 611 and the UE 612 may be configured to repeat the communication sessions in the number of slots available in the time window provided. For each new TX/RX slot in the discovery and communication session, the UE 611 and the UE 612 may be configured based on the above using the next configuration based on the initial random seed. The UE 611 and the UE 612 may run the discovery and communication session in the pre-configured number of slots. For example, according to the n-th configuration, the UE 611 may act as an activator and transmit (6140) an activation signal to the ambient device 630. After receiving activation signal, the ambient device 630 may transmit (6145) a signal to the UE 612 which acts as a reader. According to the (n+1)-th configuration, the UE 612 may act as an activator and transmit (6140') an activation signal to the ambient device 630. After receiving activation signal, the ambient device 630 may transmit (6145') a signal to the UE 611 which acts as a reader.

The UE 611 and the UE 612 may transmit (6150; 6150') their measurements in the measurement reports for each slot in the discovery and communication session to the gNB 621 which then forward (6155) the received measurement reports to the SCU 622. The SCU 622 may perform (6160) a joint estimate of the communication session and report any duplicates.

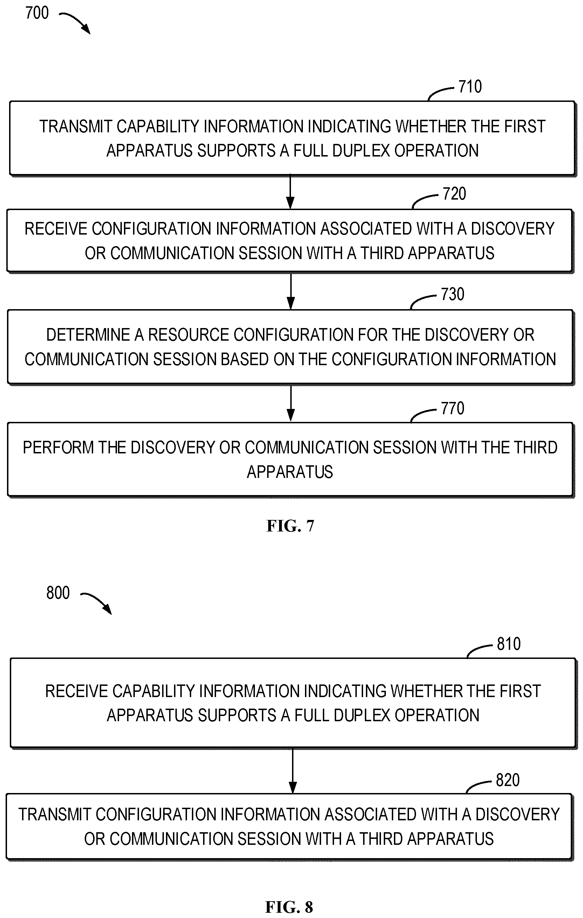

FIG. 7 shows a flowchart of an example method 700 implemented at a first device in accordance with some example embodiments of the present disclosure. For the purpose of discussion, the method 700 will be described from the perspective of the first device 110 in FIG. 1.

At block 710, the first device 110 transmits, to a second device, capability information indicating whether the first apparatus support a full duplex operation. Under a condition that the first device supports the full duplex operation, the capability information further comprises at least one of: an indication of full duplex capability, a bandwidth gap between uplink and downlink bandwidths for the full duplex operation, or a spatial gap between uplink and downlink for the full duplex operation.

At block 720, the first device 110 receives, from the second device, configuration information associated with a discovery or communication session with a third device. The configuration information indicates at least one of: a time window for the discovery or communication session, a frequency band for the discovery or communication session, or a parameter for generating the resource configuration.

At block 730, the first device 110 determines a resource configuration for the discovery or communication session based on the configuration information.

At block 740, the first device 110 performs the discovery or communication session with the third device based on the determined configuration.

In some example embodiments, the capability information further comprises at least one of: the number of reception and transmission antenna constellations, or a reception and transmission antenna constellation for the full duplex operation.

In some example embodiments, the configuration information further indicates spatial information for the discovery or communication session.

In some example embodiments, the method 700 further comprises: in response to the first device not supporting the full duplex operation, determining a time and frequency resource configuration based on the parameter, the time window, and the frequency band; and determining an activator configuration or a reader configuration based on the parameter.

In some example embodiments, the method 700 further comprises: in response to the first device supporting the full duplex operation, determining a first set of sources for transmission to the third device based on the parameter, the time window, the frequency band; and determining a second set of resources for reception from the third device based on the first set of resources, the frequency band, and the capability information.

In some example embodiments, the method 700 further comprises performing the discovery or communication session in a number of available slots in the time window.

In some example embodiments, the method 700 further comprises: performing a measurement in the discovery or communication session; and transmitting, to the second device, a session measurement report.

In some example embodiments, the first device is a terminal device, the second device is a session control unit or a network device between the terminal device and the session control unit.

FIG. 8 shows a flowchart of an example method 800 implemented at a second device in accordance with some example embodiments of the present disclosure. For the purpose of discussion, the method 800 will be described from the perspective of the second device 120 in FIG. 1.

At block 810, the second device 120 receives, from a set of first devices, capability information indicating whether the first apparatus support a full duplex operation. Under a condition that the first device supports the full duplex operation, the capability information further comprises at least one of: an indication of full duplex capability, a bandwidth gap between uplink and downlink bandwidths for the full duplex operation, or a spatial gap between uplink and downlink for the full duplex operation.

At block 820, the second device 120 transmits, to the set of first devices, configuration information associated with a discovery or communication session with a third device. The configuration information indicates at least one of: a time window for the discovery or communication session, a frequency band for the discovery or communication session, or a parameter for generating the resource configuration.

In some example embodiments, the capability information further comprises at least one of: the number of reception and transmission antenna constellations, or a reception and transmission antenna constellation for the full duplex operation.

In some example embodiments, the configuration information further indicates spatial information for the discovery or communication session.

In some example embodiments, the method 800 further comprises: receiving, from the set of first devices, a set of session measurement reports; and determining an estimation of the discovery or communication session based on the set of session measurement reports.

In some example embodiments, the first device is a terminal device, the second device is a session control unit or a network device between the terminal device and the session control unit.

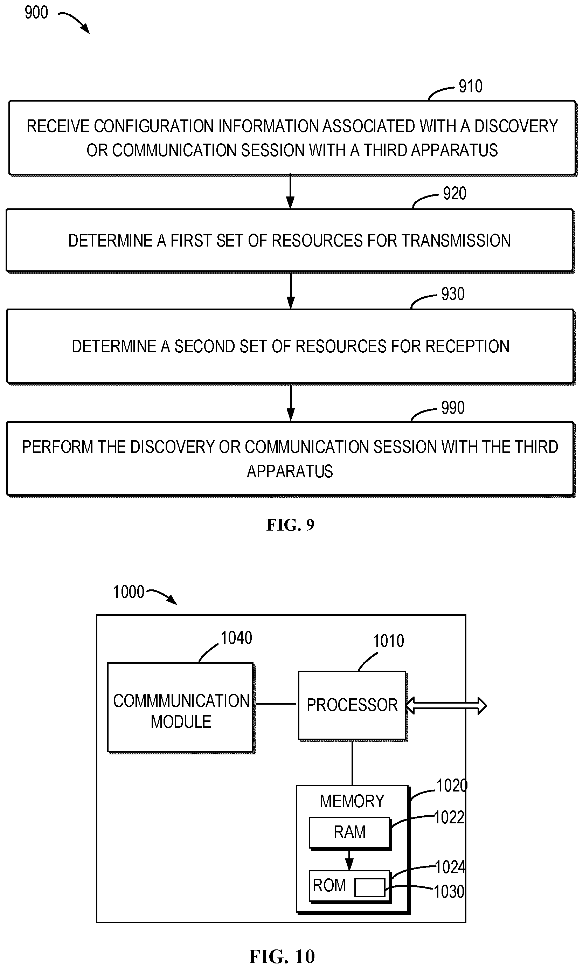

FIG. 9 shows a flowchart of an example method 900 implemented at a third device in accordance with some example embodiments of the present disclosure. For the purpose of discussion, the method 900 will be described from the perspective of the first device 110 in FIG. 1.

At block 910, the first device 110 receives, from a second device, configuration information associated with a discovery or communication session with a third apparatus. The configuration information indicates at least one of: a time window for the discovery or communication session, a frequency band for the discovery or communication session, or a parameter for generating the resource configuration.

At block 920, the first device 110 determines a first set of resources for transmission to the third device based on the parameter.

At block 930, the first device 110 determines a second set of resources for reception from the third device based on the first set of resources and capability information of the first apparatus.

At block 940, the first device 110 performs the session with the third apparatus based on the determined configuration.

In some example embodiments, the capability information further comprises at least one of: a bandwidth gap between uplink and downlink bandwidths for the full duplex operation, a spatial gap between uplink and downlink for the full duplex operation the number of reception and transmission antenna constellations, or a reception and transmission antenna constellation for the full duplex operation.

In some example embodiments, the configuration information further indicates spatial information for the discovery or communication session.

In some example embodiments, the method 900 further comprises: initializing a pseudorandom number generator based on the parameter; determining a number of random integers using the pseudorandom number generator; determining a set of transmission carriers by mapping each of the random integers to a transmission carrier; and determining the first set of resources comprising the set of transmission carriers.

In some example embodiments, a transmission duration for each transmission carrier in the set of transmission carrier is based on a type of the third apparatus.

In some example embodiments, the method 900 further comprises: determining, for each transmission carrier in the set of transmission carrier, one or more reception carriers adjacent to the transmission carrier; and determining the second set of resources comprising a set of reception carriers including the one or more reception carriers for each transmission carrier.

In some example embodiments, a reception duration for each reception carrier in the set of reception carrier is based on a transmission duration of a transmission carrier and a round-trip duration between the first apparatus and the third apparatus.

In some example embodiments, the method 900 further comprises: transmitting, to a second apparatus, the capability information indicating whether the first apparatus support a full duplex operation, wherein under a condition that the first apparatus supports the full duplex operation, the capability information further comprises at least one of: an indication of full duplex capability, the bandwidth gap between uplink and downlink bandwidths for the full duplex operation, or the spatial gap between uplink and downlink for the full duplex operation.

In some example embodiments, the method 900 further comprises performing the discovery or communication session in a number of available slots in the time window.

In some example embodiments, the method 900 further comprises: performing a measurement in the discovery or communication session; and transmitting, to the second device, a session measurement report.

In some example embodiments, the first device is a terminal device, the second device is a session control unit or a network device between the terminal device and the session control unit.

In some example embodiments, a first apparatus capable of performing any of the method 700 (for example, the first device 110 in FIG. 1) may comprise means for performing the respective operations of the method 700. The means may be implemented in any suitable form. For example, the means may be implemented in a circuitry or software module. The first apparatus may be implemented as or included in the first device 110 in FIG. 1.

In some example embodiments, the first apparatus comprises means for transmitting, to a second apparatus, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; means for receiving, from the second apparatus, configuration information associated with a discovery or communication session with a third apparatus, wherein the configuration information indicates at least one of: a time window for the discovery or communication session, a frequency band for the discovery or communication session, or a parameter for generating the resource configuration; means for determining a resource configuration for the discovery or communication session based on the configuration information; and means for performing the discovery or communication session with the third apparatus based on the determined configuration.

In some example embodiments, the capability information further comprises at least one of: the number of reception and transmission antenna constellations, or a reception and transmission antenna constellation for the full duplex operation.

In some example embodiments, the configuration information further indicates spatial information for the discovery or communication session.

In some example embodiments, the first apparatus further comprises: means for in response to the first apparatus not supporting the full duplex operation, determining a time and frequency resource configuration based on the parameter, the time window, and the frequency band; and means for determining an activator configuration or a reader configuration based on the parameter.

In some example embodiments, the first apparatus further comprises: means for in response to the first apparatus supporting the full duplex operation, determining a first set of resources for transmission to the third apparatus based on the parameter, the time window, and the frequency band; and means for determining a second set of resources for reception from the third apparatus based on the first set of resources, the frequency band, and the capability information.

In some example embodiments, the first apparatus comprises means for performing the discovery or communication session in a number of available slots in the time window.

In some example embodiments, the first apparatus further comprises: means for performing a measurement in the discovery or communication session; and means for transmitting, to the second apparatus, a session measurement report.

In some example embodiments, the first apparatus is a terminal device, the second apparatus is a session control unit or a network device between the terminal device and the session control unit.

In some example embodiments, the first apparatus further comprises means for performing other operations in some example embodiments of the method 700 or the first device 110. In some example embodiments, the means comprises at least one processor; and at least one memory storing instructions that, when executed by the at least one processor, cause the performance of the first apparatus.

In some example embodiments, a second apparatus capable of performing any of the method 800 (for example, the second device 120 in FIG. 1) may comprise means for performing the respective operations of the method 800. The means may be implemented in any suitable form. For example, the means may be implemented in a circuitry or software module. The second apparatus may be implemented as or included in the second device 120 in FIG. 1.

In some example embodiments, the second apparatus comprises means for receiving, from a set of first apparatuses, capability information indicating whether the first apparatus support a full duplex operation, wherein under a condition that the first apparatus supports the full duplex operation, the capability information further comprises at least one of: an indication of full duplex capability, a bandwidth gap between uplink and downlink bandwidths for the full duplex operation, or a spatial gap between uplink and downlink for the full duplex operation; and means for transmitting, to the set of first apparatuses, configuration information associated with a discovery or communication session with a third apparatus, wherein the configuration information indicates at least one of: a time window for the discovery or communication session, a frequency band for the discovery or communication session, or a parameter for generating the resource configuration.

In some example embodiments, the capability information further comprises at least one of: the number of reception and transmission antenna constellations, or a reception and transmission antenna constellation for the full duplex operation.

In some example embodiments, the configuration information further indicates spatial information for the discovery or communication session.

In some example embodiments, the second apparatus further comprises: means for receiving from the set of first apparatuses, a set of session measurement reports; and means for determining an estimation of the discovery or communication session based on the set of session measurement reports.

In some example embodiments, the first apparatus is a terminal device, the second apparatus is a session control unit or a network device between the terminal device and the session control unit.

In some example embodiments, the second apparatus further comprises means for performing other operations in some example embodiments of the method 800 or the second device 120. In some example embodiments, the means comprises at least one processor; and at least one memory storing instructions that, when executed by the at least one processor, cause the performance of the second apparatus.

In some example embodiments, a third apparatus capable of performing any of the method 900 (for example, the first device 110 in FIG. 1) may comprise means for performing the respective operations of the method 900. The means may be implemented in any suitable form. For example, the means may be implemented in a circuitry or software module. The third apparatus may be implemented as or included in the first device 110 in FIG. 1.

In some example embodiments, the third apparatus comprises means for receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; means for determining a first set of resources for transmission to the third apparatus based on the parameter means for determining a second set of resources for reception from the third apparatus based on the first set of resources and capability information of the first apparatus; and means for performing the discovery or communication session with the third apparatus based on the determined configuration.

In some example embodiments, the capability information further comprises at least one of: a bandwidth gap between uplink and downlink bandwidths for the full duplex operation, a spatial gap between uplink and downlink for the full duplex operation the number of reception and transmission antenna constellations, or a reception and transmission antenna constellation for the full duplex operation.

In some example embodiments, the configuration information further indicates spatial information for the discovery or communication session.

In some example embodiments, the third apparatus further comprises: means for initializing a pseudorandom number generator based on the parameter; means for determining a number of random integers using the pseudorandom number generator; means for determining a set of transmission carriers by mapping each of the random integers to a transmission carrier; and means for determining the first set of resources comprising the set of transmission carriers.

In some example embodiments, a transmission duration for each transmission carrier in the set of transmission carrier is based on a type of the third apparatus.

In some example embodiments, the third apparatus further comprises: means for determining, for each transmission carrier in the set of transmission carrier, one or more reception carriers adjacent to the transmission carrier; and means for determining the second set of resources comprising a set of reception carriers including the one or more reception carriers for each transmission carrier.

In some example embodiments, a reception duration for each reception carrier in the set of reception carrier is based on a transmission duration of a transmission carrier and a round-trip duration between the first apparatus and the third apparatus.

In some example embodiments, the third apparatus further comprises: means for transmitting, to a second apparatus, the capability information indicating whether the first apparatus support a full duplex operation, wherein under a condition that the first apparatus supports the full duplex operation, the capability information further comprises at least one of: an indication of full duplex capability, the bandwidth gap between uplink and downlink bandwidths for the full duplex operation, or the spatial gap between uplink and downlink for the full duplex operation.

In some example embodiments, the third apparatus further comprises means for performing the discovery or communication session in a number of available slots in the time window.

In some example embodiments, the third apparatus further comprises: means for performing a measurement in the discovery or communication session; and means for transmitting, to the second apparatus, a session measurement report.

In some example embodiments, the third apparatus is a terminal device, the second apparatus is a session control unit or a network device between the terminal device and the session control unit.

In some example embodiments, the third apparatus further comprises means for performing other operations in some example embodiments of the method 900 or the first device 110. In some example embodiments, the means comprises at least one processor; and at least one memory storing instructions that, when executed by the at least one processor, cause the performance of the third apparatus.

FIG. 10 is a simplified block diagram of a device 1000 that is suitable for implementing example embodiments of the present disclosure. The device 1000 may be provided to implement a communication device, for example, the first device 110 or the second device 120 as shown in FIG. 1. As shown, the device 1000 includes one or more processors 1010, one or more memories 1020 coupled to the processor 1010, and one or more communication modules 1040 coupled to the processor 1010.

The communication module 1040 is for bidirectional communications. The communication module 1040 has one or more communication interfaces to facilitate communication with one or more other modules or devices. The communication interfaces may represent any interface that is necessary for communication with other network elements. In some example embodiments, the communication module 1040 may include at least one antenna.

The processor 1010 may be of any type suitable to the local technical network and may include one or more of the following: general purpose computers, special purpose computers, microprocessors, digital signal processors (DSPs) and processors based on multicore processor architecture, as non-limiting examples. The device 1000 may have multiple processors, such as an application specific integrated circuit chip that is slaved in time to a clock which synchronizes the main processor.

The memory 1020 may include one or more non-volatile memories and one or more volatile memories. Examples of the non-volatile memories include, but are not limited to, a Read Only Memory (ROM) 1024, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 1022 and other volatile memories that will not last in the power-down duration.

A computer program 1030 includes computer executable instructions that are executed by the associated processor 1010. The instructions of the program 1030 may include instructions for performing operations/acts of some example embodiments of the present disclosure. The program 1030 may be stored in the memory, e.g., the ROM 1024. The processor 1010 may perform any suitable actions and processing by loading the program 1030 into the RAM 1022.

The example embodiments of the present disclosure may be implemented by means of the program 1030 so that the device 1000 may perform any process of the disclosure as discussed with reference to FIG. 2 to FIG. 9. The example embodiments of the present disclosure may also be implemented by hardware or by a combination of software and hardware.

In some example embodiments, the program 1030 may be tangibly contained in a computer readable medium which may be included in the device 1000 (such as in the memory 1020) or other storage devices that are accessible by the device 1000. The device 1000 may load the program 1030 from the computer readable medium to the RAM 1022 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

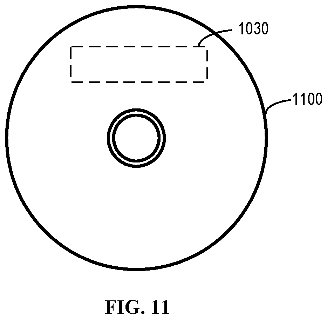

FIG. 11 shows an example of the computer readable medium 1100 which may be in form of CD, DVD or other optical storage disk. The computer readable medium 1100 has the program 1030 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

The present subject matter may comprise the following clauses.

Clause 1. A first apparatus comprising: at least one processor; and at least one memory storing instructions that, when executed by the at least one processor, cause the first apparatus to: receive, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; determine a first set of resources for transmission to the third apparatus based on the parameter; determine a second set of resources for reception from the third apparatus based on the first set of resources and capability information of the first apparatus; and perform the discovery or communication session with the third apparatus based on the determined configuration.

Clause 2. The first apparatus of clause 1, wherein the capability information further comprises at least one of: a bandwidth gap between uplink and downlink bandwidths for the full duplex operation, a spatial gap between uplink and downlink for the full duplex operation the number of reception and transmission antenna constellations, or a reception and transmission antenna constellation for the full duplex operation.

Clause 3. The first apparatus of clause 1 or 2, wherein the configuration information further indicates spatial information for the discovery or communication session.

Clause 4. The first apparatus of any of clauses 1-3, wherein the first apparatus is caused to: initialize a pseudorandom number generator based on the parameter; determine a number of random integers using the pseudorandom number generator; determine a set of transmission carriers by mapping each of the random integers to a transmission carrier; and determine the first set of resources comprising the set of transmission carriers.

Clause 5. The first apparatus of clause 4, wherein a transmission duration for each transmission carrier in the set of transmission carrier is based on a type of the third apparatus.

Clause 6. The first apparatus of clause 4, wherein the first apparatus is caused to: determine, for each transmission carrier in the set of transmission carrier, one or more reception carriers adjacent to the transmission carrier; and determine the second set of resources comprising a set of reception carriers including the one or more reception carriers for each transmission carrier.

Clause 7. The first apparatus of clause 6, wherein a reception duration for each reception carrier in the set of reception carrier is based on a transmission duration of a transmission carrier and a round-trip duration between the first apparatus and the third apparatus.

Clause 8. The first apparatus of any of clauses 1-7, wherein the first apparatus is caused to: transmit, to a second apparatus, the capability information indicating whether the first apparatus support a full duplex operation, wherein under a condition that the first apparatus supports the full duplex operation, the capability information further comprises at least one of: an indication of full duplex capability, the bandwidth gap between uplink and downlink bandwidths for the full duplex operation, or the spatial gap between uplink and downlink for the full duplex operation.

Clause 9. The first apparatus of any of clauses 1-8, wherein the first apparatus is caused to: perform the discovery or communication session in a number of available slots in the time window.

Clause 10. The first apparatus of any of clauses 1-9, wherein the first apparatus is caused to: perform a measurement in the discovery or communication session; and transmit, to the second apparatus, a session measurement report.

Clause 11. The first apparatus of any of clauses 1-10, wherein the first apparatus is a terminal device, the second apparatus is a session control unit or a network device between the terminal device and the session control unit.

Clause 12. A method implemented at a first apparatus, comprising: receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; determining a first set of resources for transmission to the third apparatus based on the parameter; determining a second set of resources for reception from the third apparatus based on the first set of resources and capability information of the first apparatus; and performing the discovery or communication session with the third apparatus based on the determined configuration.

Clause 13. The method of clause 12, wherein the capability information further comprises at least one of: a bandwidth gap between uplink and downlink bandwidths for the full duplex operation, a spatial gap between uplink and downlink for the full duplex operation the number of reception and transmission antenna constellations, or a reception and transmission antenna constellation for the full duplex operation.

Clause 14. The method of clause 12 or 13, wherein the configuration information further indicates spatial information for the discovery or communication session.

Clause 15. The method of any of clauses 12-14, further comprising: initializing a pseudorandom number generator based on the parameter; determining a number of random integers using the pseudorandom number generator; determining a set of transmission carriers by mapping each of the random integers to a transmission carrier; and determining the first set of resources comprising the set of transmission carriers.

Clause 16. The method of clause 15, wherein a transmission duration for each transmission carrier in the set of transmission carrier is based on a type of the third apparatus.

Clause 17. The method of clause 15, further comprising: determining, for each transmission carrier in the set of transmission carrier, one or more reception carriers adjacent to the transmission carrier; and determining the second set of resources comprising a set of reception carriers including the one or more reception carriers for each transmission carrier.

Clause 18. The method of clause 17, wherein a reception duration for each reception carrier in the set of reception carrier is based on a transmission duration of a transmission carrier and a round-trip duration between the first apparatus and the third apparatus.

Clause 19. The method of any of clauses 12-18, further comprising: transmitting, to a second apparatus, the capability information indicating whether the first apparatus support a full duplex operation, wherein under a condition that the first apparatus supports the full duplex operation, the capability information further comprises at least one of: an indication of full duplex capability, the bandwidth gap between uplink and downlink bandwidths for the full duplex operation, or the spatial gap between uplink and downlink for the full duplex operation.

Clause 20. The method of any of clauses 12-19, wherein the first apparatus is caused to: performing the discovery or communication session in a number of available slots in the time window.

Clause 21. The method of any of clauses 12-20, further comprising: performing a measurement in the discovery or communication session; and transmitting, to the second apparatus, a session measurement report.

Clause 22. The method of any of clauses 12-21, wherein the first apparatus is a terminal device, the second apparatus is a session control unit or a network device between the terminal device and the session control unit.

Clause 23. A first apparatus comprising: means for receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration; means for determining a first set of resources for transmission to the third apparatus based on the parameter; means for determining a second set of resources for reception from the third apparatus based on the first set of resources and capability information of the first apparatus; and means for performing the discovery or communication session with the third apparatus based on the determined configuration.

Clause 24. A computer readable medium comprising instructions stored thereon for causing an apparatus at least to perform the method of any of clauses 12-22.

## Claims

1. A first apparatus comprising:
means for receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration;
means for determining a first set of resources for transmission to the third apparatus based on the parameter;
means for determining a second set of resources for reception from the third apparatus based on the first set of resources and capability information of the first apparatus; and
means for performing the discovery or communication session with the third apparatus based on the determined configuration.

2. The first apparatus of claim 1, wherein the capability information further comprises at least one of:
a bandwidth gap between uplink and downlink bandwidths for the full duplex operation,
a spatial gap between uplink and downlink for the full duplex operation
the number of reception and transmission antenna constellations, or
a reception and transmission antenna constellation for the full duplex operation.

3. The first apparatus of claim 1 or 2, wherein the configuration information further indicates spatial information for the discovery or communication session.

4. The first apparatus of any of claims 1-3, wherein the first apparatus comprises:
means for initializing a pseudorandom number generator based on the parameter;
means for determining a number of random integers using the pseudorandom number generator;
means for determining a set of transmission carriers by mapping each of the random integers to a transmission carrier; and
means for determining the first set of resources comprising the set of transmission carriers.

5. The first apparatus of claim 4, wherein a transmission duration for each transmission carrier in the set of transmission carrier is based on a type of the third apparatus.

6. The first apparatus of claim 4, wherein the first apparatus comprises:
means for determining, for each transmission carrier in the set of transmission carrier, one or more reception carriers adjacent to the transmission carrier; and
means for determining the second set of resources comprising a set of reception carriers including the one or more reception carriers for each transmission carrier.

7. The first apparatus of claim 6, wherein a reception duration for each reception carrier in the set of reception carrier is based on a transmission duration of a transmission carrier and a round-trip duration between the first apparatus and the third apparatus.

8. The first apparatus of any of claims 1-7, wherein the first apparatus comprises:
means for transmitting, to a second apparatus, the capability information indicating whether the first apparatus support a full duplex operation, wherein under a condition that the first apparatus supports the full duplex operation, the capability information further comprises at least one of: an indication of full duplex capability, the bandwidth gap between uplink and downlink bandwidths for the full duplex operation, or the spatial gap between uplink and downlink for the full duplex operation.

9. The first apparatus of any of claims 1-8, wherein the first apparatus comprises:
means for performing the discovery or communication session in a number of available slots in the time window.

10. The first apparatus of any of claims 1-9, wherein the first apparatus comprises:
means for performing a measurement in the discovery or communication session; and
means for transmitting, to the second apparatus, a session measurement report.

11. The first apparatus of any of claims 1-10, wherein the first apparatus is a terminal device, the second apparatus is a session control unit or a network device between the terminal device and the session control unit.

12. A method implemented at a first apparatus, comprising:
receiving, from a second apparatus, configuration information associated with a discovery or communication session with a third apparatus, wherein the configuration information indicates at least one of: a time window for the discovery or communication session, a frequency band for the discovery or communication session, or a parameter for generating the resource configuration;
determining a first set of resources for transmission to the third apparatus based on the parameter;
determining a second set of resources for reception from the third apparatus based on the first set of resources and capability information of the first apparatus; and
performing the discovery or communication session with the third apparatus based on the determined configuration.

13. The method of claim 12, wherein the capability information further comprises at least one of:
a bandwidth gap between uplink and downlink bandwidths for the full duplex operation,
a spatial gap between uplink and downlink for the full duplex operation
the number of reception and transmission antenna constellations, or
a reception and transmission antenna constellation for the full duplex operation.

14. The method of claim 12 or 13, wherein the configuration information further indicates spatial information for the discovery or communication session.

15. A computer readable medium comprising instructions stored thereon for causing an apparatus at least to perform the method of any of claims 12-14.
